# EUROPEAN PATENT APPLICATION

(11) **EP 3 247 127 A1**
(43) Date of publication of application: **22.11.2017**
(21) Application number: 17169424.3
(22) Date of filing: 04.05.2017
(51) Int. Cl.: H04N 21/482

(54) **APPARATUS AND METHOD FOR PROVIDING CUSTOMIZED RATINGS FOR A USER**

(30) Priority: 19.05.2016 US 201662338692 P
(71) Applicant: Thomson Licensing, 92130 Issy-les-Moulineaux (FR)
(72) Inventor: GOELA, Naveen, Los Altos, CA California 94022 (US); LYONS, Kent, Los Altos, CA California 94022 (US); HANSSON, Caroline, Los Altos, CA California 94022 (US); DATTA, Amit, Los Altos, CA California 94022 (US); PANIGRAHI, Snigdha, Los Altos, CA California 94022 (US); TANDON, Rashish, Los Altos, CA California 94022 (US); SHANG, Wenling, Los Altos, CA California 94022 (US); BOLOT, Jean, Los Altos, CA California 94022 (US)
(74) Representative: Kerber, Thierry

(57) **Abstract**

An apparatus comprises a processor configured to receive (220) first and second ratings of a first segment of a media content respectively from second and third users; assign (230) first and second weights respectively to the first and second ratings according to relationship in a social network between the first and second users and between the first and third users respectively; adjust (240) the first and second ratings using the first and second weights, respectively; combine (250) the adjusted first and second ratings to form the customized rating data of the first segment for the first user; and a memory storing the customized rating data.

## Description

### BACKGROUND OF THE INVENTION

### Field of the Invention

The present principles generally relate to an apparatus and method for providing a customized rating of a media content segment, such as a video segment, using crowdsourcing and relationship in a social network. In particular, the customized rating provided to a user includes ratings provided by other users and the rating provided by one of the other users is weighted according to the relationship in the social network between the one of the other users and the user receiving the customized rating.

### Background Information

As the amount of video data (i.e., raw or uncompressed high definition video data, video length, number of videos) available on the Internet continues to increase at a rapid pace, consumers of video on demand systems are downloading and viewing several different videos in one session. Consumers often wish to identify specific video segments which might be popular in their social community. As such, there is a need for providing user ratings customized from ratings provided by other users in the social network or arbitrary users.

### SUMMARY OF THE INVENTION

According to an exemplary embodiment of the present principles, a method for providing customized rating data for a first user is presented. The method comprises receiving first and second ratings of a first segment of a media content respectively from second and third users; assigning first and second weights respectively to the first and second ratings according to relationship in a social network between the first and second users and between the first and third users respectively; adjusting the first and second ratings using the first and second weights, respectively; combining the adjusted first and second ratings to form the customized rating data of the first segment for the first user.

In an advantageous execution mode, the method comprises delivering the customized rating data of the first segment to the first user.

According to an exemplary embodiment of the present principles, an apparatus is presented. The apparatus comprises a processor configured to receive first and second ratings of a first segment of a media content respectively from second and third users; assign first and second weights respectively to the first and second ratings according to relationship in a social network between the first and second users and between the first and third users respectively; adjust the first and second ratings using the first and second weights, respectively; combine the adjusted first and second ratings to form the customized rating data of the first segment for the first user; and a memory storing the customized rating data.

In an advantageous implementation mode, the processor is configured to deliver the customized rating data of the first segment to the first user.

According to an exemplary embodiment of the present principles, a computer program product stored in non-transitory computer-readable storage media is presented, comprising computer-executable instructions for: receiving first and second ratings of a first segment of a media content respectively from second and third users; assigning first and second weights respectively to the first and second ratings according to relationship in a social network between the first and second users and between the first and third users respectively; adjusting the first and second ratings using the first and second weights, respectively; combining the adjusted first and second ratings to form the customized rating data of the first segment for the first user.

### DETAILED DESCRIPTION OF THE DRAWINGS

The above-mentioned and other features and advantages of the present principles and the manner of attaining them, will become more apparent and the present principles will be better understood by reference to the following description of embodiments of the present principles taken in conjunction with the accompanying drawings, wherein:
FIG. 1 shows an exemplary system according to the present principles;
FIG. 2 shows an exemplary method according to the present principles;
FIG.3 shows an exemplary social graph according to the present principles;
FIG. 4 shows an exemplary timeline representing customized rating data displayed on the display of a user device according to the present principles; and
FIG. 5 shows an exemplary representation of combining ratings from three users to form customized rating data of each media content segment for the first user according to the present principles.

The examples set out herein illustrate exemplary embodiments of the present principles. Such examples are not to be construed as limiting the scope of the invention in any manner.

### DETAILED DESCRIPTION

A social network or group, as used herein, refers generally to a social structure of nodes (e.g., individuals or organizations) that are linked by one or more types of interdependency such as values, ideas, friendship, kinship and the like. The present principles recognize that the media content rating information of members of a social network are valuable in helping a user identify popular media content segments, such as video segments, that are popular to the social network and of interest to the user.

Social networking sites, such as MySpace and Facebook, provide services and tools that help users maintain and expand their circles of friends usually by exploiting existing relationships. A social networking site provides a service or system that facilitates the creation, maintenance and management of social networks. For example, Facebook is a social networking site that allows users to create social networks such as interest groups therein. In one example, a social network may comprise a group of the user's friends. In another example, a social network may comprise a group of users sharing a similar interest in travel.

The present principles recognize that the rating of a direct friend should be given more weight than that of an indirect friend because the possibility that a user likes the same media content segment, such as video segment, of a direct friend is higher than that of an indirect friend. Accordingly, the present principles provide an apparatus and method for generating customized rating data of at least one media content segment of a media content for a user by weighing rating provided by a different user according to the relationship in a social network between the user and the different user.

As used herein, "media content" may be defined to include any type of media, including any type of audio, video, and/or image media content received from any source. For example, "media content" may include Internet content, streaming services (e.g., M-GO, Netflix, Hulu, Amazon), recorded video content, video-on-demand content, broadcasted content, television content, television programs (or programming), advertisements, commercials, music, movies, video clips, interactive games, network-based entertainment applications, and other media assets. Media assets may include any and all kinds of digital media formats, such as audio files, image files or video files.

The present description illustrates the present principles. It will thus be appreciated that those skilled in the art will be able to devise various arrangements that, although not explicitly described or shown herein, embody the present principles and are included within its spirit and scope.

All examples and conditional language recited herein are intended for pedagogical purposes to aid the reader in understanding the present principles and the concepts contributed by the inventors to furthering the art, and are to be construed as being without limitation to such specifically recited examples and conditions.

Moreover, all statements herein reciting principles, aspects, and embodiments of the present principles, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the present principles. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor ("DSP") hardware, read-only memory ("ROM") for storing software, random access memory ("RAM"), and non-volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The present principles as defined by such claims reside in the fact that the functionalities provided by the various recited means are combined and brought together in the manner which the claims call for. It is thus regarded that any means that can provide those functionalities are equivalent to those shown herein.

Reference in the specification to "one embodiment", "an embodiment", "an exemplary embodiment" of the present principles, or as well as other variations thereof, means that a particular feature, structure, characteristic, and so forth described in connection with the embodiment is included in at least one embodiment of the present principles. Thus, the appearances of the phrase "in one embodiment", "in an embodiment", "in an exemplary embodiment", or as well any other variations, appearing in various places throughout the specification are not necessarily all referring to the same embodiment.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as readily apparent by one of ordinary skill in this and related arts, for as many items listed.

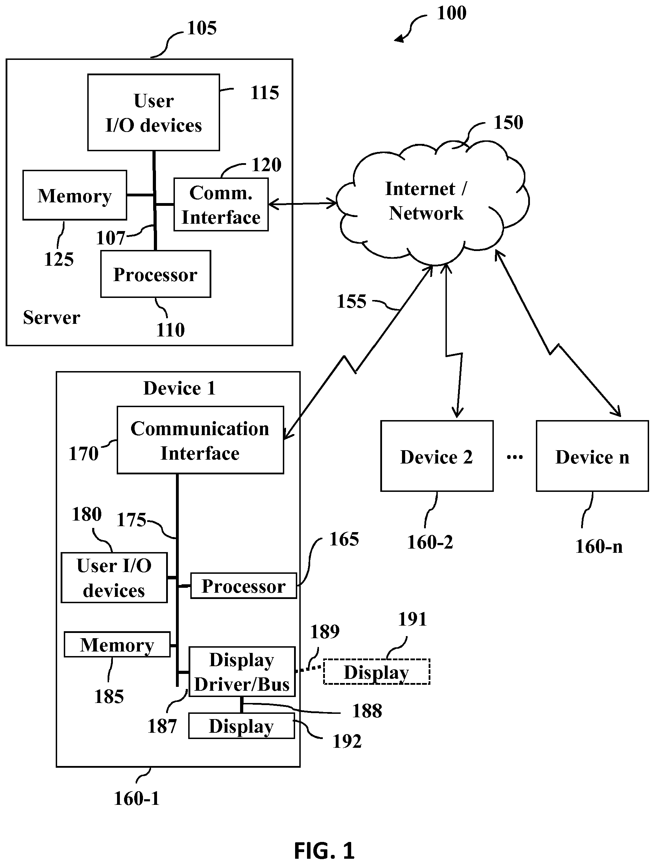

**FIG. 1** shows an exemplary system according to the present principles. For example, a system 100 in FIG. 1 includes a social network server 105 which provides a social network site helping users maintain and expand their circles of friends, usually by exploiting existing relationships. Users access the social network site using user devices 160-1 to 160-n. The social network server 105 is operative or configured to generate customized rating data of a media content segment by combining rating data of the media content segment provided by other users. In generating the customized rating data for the user, the social network server 105 is operative or configured to apply a weight to the rating of another user according to the social relationship of the user and the another user providing the rating.

Various exemplary user devices 160-1 to 160-n in FIG. 1 may communicate with the exemplary server 105 over a communication network 150 such as the Internet, a wide area network (WAN), and/or a local area network (LAN). The social network server 105 may communicate with user devices 160-1 to 160-n in order to provide and/or receive relevant information such as rating data, metadata, web pages, media contents, etc., to and/or from user devices 160-1 to 160-n. The social network server 105 may also provide additional processing of information and data when the processing is not available and/or capable of being conducted on the local user devices 160-1 to 160-n. As an example, the social network server 105 may be a computer having a processor 110 such as, an Intel processor, running an appropriate operating system such as, Windows 2008 R2, Windows Server 2012 R2, Linux operating system, etc.

Although illustrated as a social network server, the server 105 may be a home gateway serving user devices 160-1 to 160-n. Even though a home gateway does not provide a social networking function, a home gateway is able to perform processes as described in this disclosure, as will be described in more details later.

User devices 160-1 to 160-n shown in FIG. 1 may be one or more of, e.g., a PC, a laptop, a tablet, a cellphone. A detailed block diagram of an exemplary user device according to the present principles is illustrated in block 160-1 of FIG. 1 as Device 1 and will be further described below.

An exemplary user device 160-1 in FIG. 1 comprises a processor 165 for processing various data and for controlling various functions and components of the device 160-1, including video decoding, processing to play and display a content, receiving customized rating data from a server, and receiving rating data from a different user. The processor 165 communicates with and controls the various functions and components of the device 160-1 via a control bus 175 as shown in FIG. 1.

The exemplary device 160-1 in FIG. 1 may comprise user input/output (I/O) devices 180 which may comprise, e.g., a touch and/or a physical keyboard for inputting user data, and/or a speaker, and/or other indicator devices for outputting visual and/or audio user data and feedback. Device 160-1 may also comprise a display 192 which is driven by a display driver/bus component 187 under the control of processor 165 via a display bus 188 as shown in FIG. 1. In one exemplary embodiment, the display 192 is capable of displaying the representation of customized rating data. The type of the display 192 may be, e.g., LCD (Liquid Crystal Display), LED (Light Emitting Diode), OLED (Organic Light Emitting Diode), and etc. In addition, an exemplary user device 160-1 according to the present principles may have its display outside of the user device, or that an additional or a different external display may be used to display the content provided by the display driver/bus component 187. This is illustrated, e.g., by an external display 191 which is connected to an external display bus/interface 189 of device 160-1 of FIG. 1.

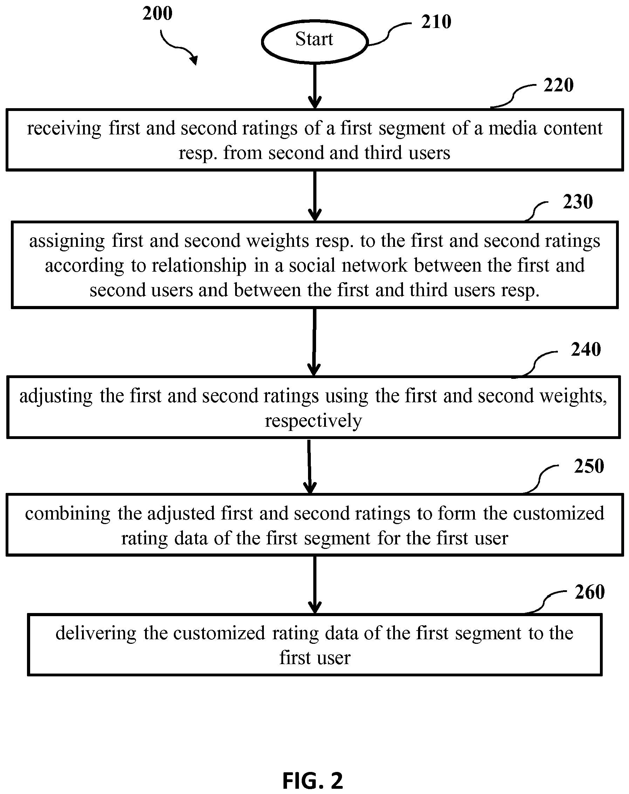

Exemplary device 160-1 also comprises a memory 185 which may represent both a transitory memory such as RAM, and a non-transitory memory such as a ROM, a hard drive or a flash memory, for processing and storing different files and information as necessary, including computer program products and software (e.g., for performing a method as represented by a flow chart diagram of FIG. 2 to be discussed below), webpages, user interface information, metadata including electronic program listing information, databases, and etc., as needed. In addition, Device 160-1 also comprises a communication interface 170 for connecting and communicating to/from server 105 and/or other devices, via, e.g., network 150 using e.g., a connection through a cable network, a FIOS network, a Wi-Fi network, and/or a cellphone network (e.g., 3G, 4G, LTE), and etc.

User devices 160-1 to 160-n in FIG. 1 may access different media assets, web pages, services or databases provided by server 105 using, e.g., HTTP protocol. A well-known web server software application which may be run by server 105 to provide web pages is Apache HTTP Server software available from http://www.apache.org. Likewise, examples of well-known media server software applications include Adobe Media Server and Apple HTTP Live Streaming (HLS) Server. Using media server software as mentioned above and/or other open or proprietary server software, server 105 may provide media content services similar to, e.g., Amazon.com, Netflix, or M-GO. Server 105 may use a streaming protocol such as e.g., Apple HTTP Live Streaming (HLS) protocol, Adobe Real-Time Messaging Protocol (RTMP), Microsoft Silverlight Smooth Streaming Transport Protocol, etc., to transmit various programs comprising various media assets such as, e.g., video programs, audio programs, movies, TV shows, software, games, electronic books, electronic magazines, electronic articles, and etc., to an end-user device 160-1 for purchase and/or viewing via streaming, downloading, receiving or the like.

The server 105 comprises the processor 110 which controls the various functions and components of the server 105 via a control bus 107 as shown in FIG. 1. In addition, a server administrator may interact with and configure server 105 to run different applications using different user input/output (I/O) devices 115 (e.g., a keyboard and/or a display) as well known in the art. Server 105 also comprises a memory 125 which may represent both a transitory memory such as RAM, and a non-transitory memory such as ROM, a hard drive or a flash memory, for processing and storing different files and information as necessary, including computer program products and software (e.g., as represented by a flow chart diagram of FIG. 2), webpages if the server is a social networking server, user interface information, user profiles, metadata including electronic program listing information, databases, search engine software, etc., as needed.

In addition, server 105 is connected to network 150 through a communication interface 120 for communicating with other servers or web sites (not shown) and to one or more user devices 160-1 to 160-n, as shown in FIG. 1. The communication interface 120 may also represent television signal modulator and RF transmitter in the case of when the content provider 105 represents a television station, cable or satellite television provider. In addition, one skilled in the art would readily appreciate that other well-known server or user device components, such as, e.g., power supply, cooling fans, etc., may also be needed, but are not shown in FIG. 1 to simplify the drawing.

**FIG. 2** represents a flow chart diagram of an exemplary method 200 providing customized rating data for a first user according to the present principles. Process 200 may be implemented as a computer program product comprising computer executable instructions which may be executed by e.g., processor 165 of device 160-1 and/or processor 110 of server 105 of FIG. 1. In the following example, the processor 110 is used to execute method 200, but the processor 165 is also illustrated for performing the same steps. The computer program product having the computer-executable instructions may be stored in a non-transitory computer-readable storage media as represented by e.g., memory 185 and/or memory 125 of FIG. 1. One skilled in the art can readily recognize that the exemplary method shown in FIG. 2 may also be implemented using a combination of hardware and software (e.g., a firmware implementation), and/or executed using programmable logic arrays (PLA) or application-specific integrated circuit (ASIC), etc., as already mentioned above.

The method 200 is invoked at 210 of FIG. 2 and proceeds to step 220. At step 220 of FIG. 2, the processor 110 is operative or configured to receive first and second ratings of a first segment of a media content respectively from second and third users.

A used herein, the term "media content segment" refers to a video and/or audio clip. The term also refers to a media content that is logically or physically segmented into segments. For example, each segment may last for a predetermined playback interval, such as but not limited to 90 seconds. The segmentation is important, so that when a user specifies a point in the media content and provides the rating information, the portion of the media content can be identified. The segmentation may also base on different scenes, each constitutes a segment.

If the server 105 is a social networking server, the processor 110 receives the first and second ratings from the respective user devices used by the second and third users when the second and third users respectively enter the first and second ratings through, for example, a user interface. As a home gateway, the processor 110 is operative or configured to receive the first and second ratings by requesting the second and third users to submit the first and second rating using the respective user devices.

The processor 165 of the user device of the first user can also perform this step by requesting the second and third users to submit the first and second rating of the first segment of the media content via the respective user devices.

At step 230 of Fig. 2, the processor 110 is operative or configured to assign first and second weights respectively to the first and second ratings according to relationship in a social network between the first and second users and between the first and third users respectively.

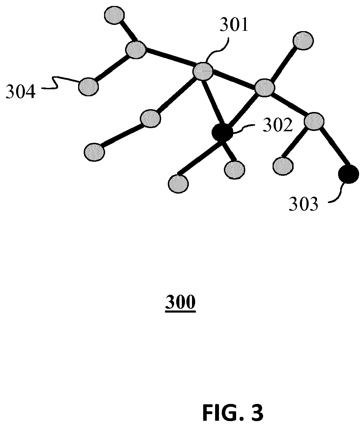

If the server 105 is considered a social networking server, the processor 110 is operative or configured to determine the relationship between the first and second users and the relationship between the first and third users. For example, according to a database, the processor 110 can determine relationship of the first user 301 with respect to other users, such as the second user 302 and the third user 303, as shown in a social graph 300 shown in FIG. 3. In the social graph, each node represents a user and each link is a connection between two nodes. As shown in the social graph 300, the second user 302 is a direct friend or connection of the first user 301 because they are connected through only one link or hop, while the third user 303 and a four user 304 are indirect friends of the first user because it needs more than one link (hop) to reach the third user 303 and the fourth user 304. The third user 303 is a secondary friend because it needs two links (hops) to connect to the first user 301 and the fourth user 304 is a tertiary friend because it needs three links (hops) to connect to the first user 301. According to the principles of the disclosure, the processor 105 should assign more weight to the rating of the second user 302 than the rating of the third user 303. The principles of the disclosure is not limited to using only ratings from first and second users, ratings from one or more of other users can be considered as well. If the rating of the fourth user 304 is considered in generating the customized rating data for the first user, the assigned weight should be less than that of the third user. For example, if the weight scale is from 0 to 1, the weights assigned to second, third and further users may be 1, 0.8, and 0.6, respectively. As such, the relationship between the first user and another user in one embodiment is the distance between them, which is measured by number of links between them.

If the rating of a user outside of the social network of the first user, i.e., not in the social graph 300, is considered, the assigned weight should be less than those indirect friends in the social network.

There are many different types of weighting possible, which will affect the ratings/rankings of video segments. One possible weighting is for a discounted (geometric) weighting based on shortest hop distance between users on a social graph. If a user is one hop away from the user, the weight is 0 < DELTA < 1, if two hops away, the weight is DELTA*DELTA. In general, one formula for weight is therefore DELTA^ (# hops). DELTA may have but is not limited to, a value of 0.9. If users are not related in a graph, then if they share the same interests in movie topics, their ratings could have higher weight. In other words, users in the same social group for movie genres would affect each other's weights more significantly.

If the server 105 is a home gateway, the processor 110 is operative or configured to request the relationship between the first and second users and between the first and third users from the user device of the first user, and assign the weights to the first and second ratings accordingly, as described above.

If the processor 165 of the user device used by the first user is used to perform step 230, the processor 165 is operative or configured to obtain the relationship between the first and second users and between the first and third users using the account of the first user in the social network, and assign the weights to the first and second ratings accordingly, as described above.

At step 240 of FIG. 2, the processor 110 is operative or configured to adjust the first and second ratings using the first and second weights, respectively. For example, the first and second ratings are adjusted by multiplying them with the respective weights. This is done regardless whether the server 105 is functioning as a social networking server or a home gateway. The processor 165 of the user device for the first user can perform this step in a similar manner.

At step 250, the processor 110 is operative or configured to combine the adjusted first and second ratings to form the customized rating data of the first segment for the first user. This is done regardless whether the server 105 is functioning as a social networking server or a home gateway. The processor 165 of the user device for the first user can perform this step in a similar manner. The customized rating data may be stored in memory 125 or 185.

At step 260, the processor 110 is operative or configured to deliver the customized rating data of the first segment to the first user. The processor 110 delivers the customized data to the first user by sending a message including the customized rating data to the user device of the first user for display by the user device. This is done regardless whether the server 105 is functioning as a social networking server or a home gateway. The processor 165 of the user device for the first user can perform this step by displaying the representation of the customized rating data.

In one embodiment, the processor 110 or 165 may be operative or configured to generate customized rating data for at least two media content segments of the media content using the same method. For example, the receiving step 220 also receives third and fourth ratings of a second segment of the media content from the first and second users, adjusting step 240 adjusts the third and fourth ratings using the first and second weights, respectively, and combining step 250 combines the adjusted third and fourth ratings to form the customized rating data of the second segment, and delivering step 260 delivers the customized rating data of the second media content segment to the first user. The same method can be applied to all other segments of the media content, so that customized rating data for each segment is delivered to the first user.

In one embodiment, the processor 110 or 165 may be operative or configured to generate customized rating data of the first segment from more than the second and third users. For example the receiving step 220 receives a third rating of the first segment from at least a fourth user, the assigning step 230 assigns a third weight to the third rating according to relationship in the social network between the first user and the fourth user, adjusting step 240 adjusts the fourth rating using the third weight, and combining step 250 combines the adjusted first, second, and third ratings to form the customized rating data of the first segment.

The number of users providing the rating information is not limited to three. It can be any number of users providing the rating information to form customized rating data for any number of segments fully taking advantage of the crowdsourcing environment.

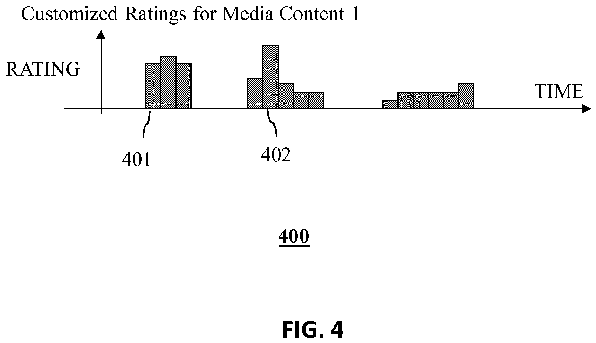

**FIG. 4** shows an exemplary user interface 400 for display on the display of the user device of the first user showing an example of representation of the customized data for each segment of a media content. The media content is represented by a timeline, wherein the media content is segmented in the time domain into media content segments. In this example, each media content segments is, but not limited to, 90 seconds long. For example, segments 401 and 402 are two media content segments. Those segments with bars indicate user ratings of those segments. The length of a bar indicates the rating, which may be any scale, for example, from 0-10. As shown, the segment 402 has a better rating than segment 401. Other segments without bars are not rated by users yet.

It should be noted that the same timeline for a media content can be used as a user interface for a user to enter a rating of a specific segment. A user can point to a point in the timeline and the processor 165 will display the time for that point. If the segment including that time point is the one for which the user wants to provide a rating, the user can activate a select function by using one of the user I/O devices 180 and the processor 165 is operative or configured to allow the user to enter the rating by for example displaying a text entry field. The processor 165 then sends the rating information and an identification of that segment to the server 105 or another user device.

In reality, a ratings collection system will accept any input from users: e.g., likes/dislikes, smiley-faces, or comments, in addition to numeric ratings. A ratings collection system can decide a score for each type of input. For example, if the rating scale is from 0 to 10, if a smiley-face is provided for a particular video segment, it is worth 7 rating points. If a nice comment is provided, it is worth 10 rating points. Once the rating is collected for each user, then a customized rating based on all friends in a social graph is produced as already described.

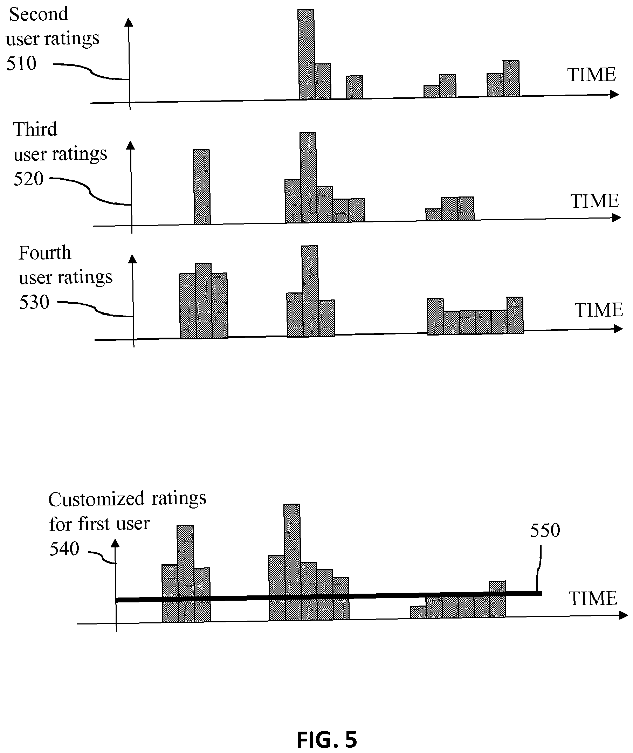

**FIG. 5** illustrates the combining step 250. Timelines 510, 520, 530 represents the ratings of the media content segments of a media content from the second, third and fourth users, respectively. These ratings are adjusted according to the adjusting step 240 according weights derived from the assigning step 230. The adjusted ratings are then combined to form the customized rating data by the combining step 250. Timeline 540 is a representation of the customized rating data as displayed to the first user. It should be noted that if there is more than one rating for a media content segment, in this embodiment, the largest adjusted rating is selected in the customized rating data. In another embodiment, the average, the lowest, or median can be selected.

In one embodiment, the processor 110 is operative or configured to compile a new media content tailored to the first user by extracting all the segments from the media content, which have ratings in the customized rating data exceeding a threshold 550. The processor 110 is operative or configured to send the first user the new media content. The new media content includes highlights of the media content. A highlight is any portion of the video that contains a key or remarkable event. Because the highlights capture the essence of the video, highlight segments can provide a good summary of the video. For example, in a video of a sporting event, a summary would include scoring events and exciting plays. As such, in the future, the first user can request the summary of the media content instead of media content itself.

If the processor 165 is the one that generates the customized rating data, the processor 165 is operative or configured to compile a summary including a list of segments that have ratings over the threshold 550.

While several embodiments have been described and illustrated herein, those of ordinary skill in the art will readily envision a variety of other means and/or structures for performing the functions and/or obtaining the results and/or one or more of the advantages described herein, and each of such variations and/or modifications is deemed to be within the scope of the present embodiments. More generally, those skilled in the art will readily appreciate that all parameters, dimensions, materials, and configurations described herein are meant to be exemplary and that the actual parameters, dimensions, materials, and/or configurations will depend upon the specific application or applications for which the teachings herein is/are used. Those skilled in the art will recognize, or be able to ascertain using no more than routine experimentation, many equivalents to the specific embodiments described herein. It is, therefore, to be understood that the foregoing embodiments are presented by way of example only and that, within the scope of the appended claims and equivalents thereof, the embodiments disclosed may be practiced otherwise than as specifically described and claimed. The present embodiments are directed to each individual feature, system, article, material and/or method described herein. In addition, any combination of two or more such features, systems, articles, materials and/or methods, if such features, systems, articles, materials and/or methods are not mutually inconsistent, is included within the scope of the present embodiment.

## Claims

1. A method (200) for providing customized rating data for a first user, the method comprising:
receiving (220) first and second ratings of a first segment of a media content respectively from second and third users;
assigning (230) first and second weights respectively to the first and second ratings according to relationship in a social network between the first and second users and between the first and third users respectively;
adjusting (240) the first and second ratings using the first and second weights, respectively;
combining (250) the adjusted first and second ratings to form the customized rating data of the first segment for the first user.

2. The method of claim 1, wherein the method comprises delivering (260) the customized rating data of the first segment to the first user.

3. The method of claim 1, wherein the relationship between the first user (301) and a different user (302, 303, 304) is represented by a distance in a social graph in the social network between the first user and the different user.

4. The method of claim 1, wherein the media content includes a second segment, the receiving receives third and fourth ratings of the second segment of from the first and second users, the adjusting adjusts the third and fourth ratings using the first and second weights, respectively, and the combining combines the adjusted third and fourth ratings to form the customized rating data of the second segment, and the delivering delivers the customized rating data of the second segment to the first user.

5. The method of claim 4, wherein the media content includes other segments and the method process each of the other segments to form customized rating data of all segments of the media content.

6. The method of claim 5, wherein combining (250) comprises selecting a larger of one of the two adjusted ratings of each segment as the customized rating data of that segment.

7. The method of claim 6, further comprising compiling a summary including all segments having ratings in the customized rating data over a threshold.

8. The method of claim 7, further comprising sending the summary to the first user.

9. The method of claim 1, wherein the receiving receives a third rating of the first segment from a fourth user, the assigning assigns a third weight to the third rating according to relationship in the social network between the first user and the fourth user, the adjusting adjusts the fourth rating using the third weight, and the combining combines the adjusted first, second, and third ratings to form the customized rating data.

10. An apparatus (105, 160) comprising:
a processor (110, 165) configured to receive first and second ratings of a first segment of a media content respectively from second and third users; assign first and second weights respectively to the first and second ratings according to relationship in a social network between the first and second users and between the first and third users respectively; adjust the first and second ratings using the first and second weights, respectively; combine the adjusted first and second ratings to form the customized rating data of the first segment for the first user; and
a memory (125, 185) storing the customized rating data.

11. The apparatus (105, 160) according to claim 10, wherein said apparatus is adapted to execute a method according to any of claims 2 to 9.

12. A computer program comprising computer-executable instructions for:
receiving first and second ratings of a first segment of a media content respectively from second and third users;
assigning first and second weights respectively to the first and second ratings according to relationship in a social network between the first and second users and between the first and third users respectively;
adjusting the first and second ratings using the first and second weights, respectively;
combining the adjusted first and second ratings to form the customized rating data of the first segment for the first user.

13. The computer program of claim 12, wherein said computer program further comprises computer-executable instructions for executing a method according to any of claims 2 to 9.
